(19) Europäisches Patentamt
European Patent Office
Office européen des brevets

(11) **EP 1 379 014 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(51) Int Cl.:
*H04L 12/43* *(2006.01)* *H04W 16/14* *(2009.01)*

(21) Anmeldenummer: **03014356.4**

(22) Anmeldetag: **26.06.2003**

(54) **Kollisionsminimiertes Verfahren zur Übertragung von Daten**

Method for minimisation of collisions for the data transport

Procédé pour minimiser les collisions pour la communication de données

(84) Benannte Vertragsstaaten:
**AT CH DE LI**

(30) Priorität: **05.07.2002 DE 10230543**
**29.07.2002 DE 10234411**

(43) Veröffentlichungstag der Anmeldung:
**07.01.2004 Patentblatt 2004/02**

(73) Patentinhaber: **Techem Energy Services GmbH**
**65760 Eschborn (DE)**

(72) Erfinder:
• **Matussek, Dirk**
**60318 Frankfurt am Main (DE)**
• **Hansing, Martin**
**65931 Frankfurt am Main (DE)**

(74) Vertreter: **Keil & Schaafhausen**
**Patent- und Rechtsanwälte**
**Friedrichstrasse 2-6**
**60323 Frankfurt am Main (DE)**

(56) Entgegenhaltungen:
**EP-A- 0 720 321    EP-A- 1 189 366**
**WO-A-99/17575     US-A- 5 231 635**
**US-A- 5 428 819    US-A- 5 896 375**
**US-A- 6 038 455    US-A- 6 130 886**

**Beschreibung**

**Anwendungsgebiet**

Die vorliegende Erfindung betrifft ein kollisionsminimiertes Verfahren zur Übertragung von Daten zwischen mehreren Kommunikationseinheiten auf einem Übertragungsmedium, insbesondere einem Datenübertragungskanal, wobei jeweils eine Gruppe von Kommunikationseinheiten ein System bildet und ein oder mehrere Systeme das gleichen Übertragungsmedium nutzen. Dabei steht jeder Kommunikationseinheit eines Systems eine Anzahl von Kommunikationszeitschlitzen zum Senden und/oder Empfangen während eines Kommunikationszyklus zur Verfügung, innerhalb derer die Kommunikationseinheiten eines Systems kollisionsfrei Daten austauschen können. Die Zykluslänge eines Systems wird durch die individuelle, von denen anderer Systeme innerhalb der Reichweite abweichende Anzahl seiner Zeitschlitze bestimmt.

Das Verfahren ist insbesondere für eine Übertragung zwischen Verbrauchsdatenerfassungsgeräten, Sensoren, Aktoren und Steuer- und/oder Erfassungseinheiten, Repeatern zur Reichweitenerhöhung, im folgenden auch Kommunikationseinheiten oder Systemkomponenten genannt, in einem nicht per se kollisionsfreien Übertragungsmedium, z.B. Funk, geeignet. Zur kollisionsfreien Datenübertragung werden jeder Systemkomponente ein oder mehrere Sende-/Empfangszeitschlitze zur Datenübertragung zugewiesen, wobei sich das Zeitschlitzschema zyklisch wiederholt. Für einen möglichst störungsarmen Betrieb mehrerer solcher Systeme (=Installationen) innerhalb der gegenseitigen Reichweite auf dem gleichen Übertragungsmedium (z.B. mehrere Funksysteme in den Wohnungen eines Mehrfamilienhauses, die auf dem gleichen Datenübertragungskanal senden) wird die jeweils konstante Zykluslänge der Zeitschlitz-Zyklen installationsspezifisch individuell so gewählt, dass die Wahrscheinlichkeit wiederholter Kollisionen der einzelnen Installationen untereinander minimiert wird.

Das Verfahren soll insbesondere eine stromsparende Lösung der (bidirektionalen, drahtlosen) Kommunikation zwischen mehrheitlich batteriebetriebenen Systemkomponenten bereitstellen.

**Stand der Technik**

Aus der US 5,732,076 sind ein integriertes Kommunikationssystem und ein entsprechendes Verfahren bekannt, bei welchem zwei Protokolle in der selben geographischen Region unterstützt werden. Jedes Protokoll definiert einen Zeitrahmen und Zeitschlitze von unterschiedlicher Länge, aus denen ein zusammengesetzter Zeitrahmen gebildet wird. Eine erste Basisstation kommuniziert innerhalb eines ersten Zeitschlitzsatzes des zusammengesetzten Zeitrahmens anhand eines der beiden Protokolle und eine zweite Basisstation kommuniziert innerhalb eines zweiten Zeitschlitzsatzes des zusammengesetzten Zeitrahmens anhand des anderen Protokolls. Das System verfügt außerdem über Abstimmungselektronik, um Kollisionen zu verhindern, die zwischen Kommunikationsverbindungen der Basisstationen mit deren Benutzern stattfinden können. Bei einer Ausführungsform des bekannten Systems ist das eine Protokoll so aufgebaut, dass dessen Zeitschlitzdauer der zweifachen Zeitschlitzdauer des anderen Protokolls entspricht. Des weiteren beträgt die Dauer eines Zeitrahmens des einen Protokolls das vierfache der Dauer eines Zeitrahmens des anderen Protokolls. Dabei besteht jedoch der Nachteil, dass allen Basisstationen ein fester Zeitrahmen mit definierten Zeitschlitzen zugewiesen werden muss. Dies führt zu einem starren System, das bspw. nur umständlich um weitere neue Basisstationen ergänzt werden kann.

In der DE 198 24 471 A1 wird ein Verfahren beschrieben, in dem ein oder mehrere Übertragungsparameter stochastisch variiert werden, um dauerhafte Kollisionen mit gleichartigen Nachbarinstallationen zu vermeiden. Der Nachteil des in der DE 198 24 471 A1 beschriebenen Verfahrens liegt in der stochastischen Variation der Übertragungsparameter. Hierdurch wird das System nichtdeterministisch, was den Realisierungsaufwand der Geräte in Hardware und Software (und damit die Entwicklungs- und Stückkosten) erhöht. Außerdem kann der Test und Fehlerbehebungsaufwand bei Entwicklung und beim Betrieb einer Installation (z.B. bei der Inbetriebnahme oder im Fall eines Synchronisationsverlustes) beträchtlich sein. Die stochastische Komponente erhöht allgemein die Komplexität des Systems.

Die US 6,038,455 beschreibt ein zellular abgebautes drahtloses Kommunikationssystem, in dem das abzudeckende geografische Gebiet in nominal hexagonal geformte Zellen aufgeteilt ist, die auf bestimmten Frequenzen senden und empfangen. Da dieselben Frequenzen auch von benachbarten Zellen verwendet werden, können diese miteinander interferieren. Dies führt zu die Übertragungsqualität beeinträchtigenden Kollisionen. Um diese zu vermeiden, wird eine Synchronisation aller Zellen auf eine gemeinsame Zeitbasis vorgeschlagen, wobei sich die beteiligten Zellen die zur Verfügung stehenden Zeitschlitze dann durch jeder bestimmten Zelle zugewiesene Zeitschlitze teilen, die für die verschiedenen Zellen in einem vorgegebenen Rhythmus aktiviert werden. Die regional verteilten Zellen werden durch viele verschiedene Kommunikationsgeräte genutzt. Dies kann zu unterschiedlicher Auslastung verschiedener Zellen führen, der durch verschieden lange Sendezeiten für verschiedene Zellen bspw, aufgrund einer typischen erwarteten Auslastung Rechnung getragen werden kann.

Schließlich beschreibt die EP 1 189 366 A1 ein drahtloses Kommunikationsnetzwerk, bei dem für eine Trägerfrequenz verschiedene physikalische Kanäle in Form von Zeitschlitzen definiert werden, wobei die Folge der verschiedenen Kanäle einen sog. "Frame" bilden, der sich beliebig oft wiederholt. Die Anzahl der Wiederholungen eines Kanals in aufeinanderfolgenden Frames werden als sog. "Multiframes" definiert, wobei für jeden verschiedenen Kanal unterschiedlich lange Mutliframes definiert sind. Jeder physikalisch verschiedene Kanal kann bestimmten Inhalten (Daten, Übertragungssteuerung, allgemeine Steuerung) zugewiesen sein. Um die einzelnen physikalischen Kanäle respektive Multiframes dieses einen Übertragungssystems zu de-synchronisieren, kann die Anzahl der einen Multiframe definierenden Frames für die verschiedenen Kanäle jeweils eine Primzahl sein, so dass sich dergleiche Frameaufbau möglichst selten wiederholt. Dies soll es einzelnen mobilen Einheiten ermöglichen, sog. Broadcast Channel Bursts möglichst zuverlässig zu empfangen und die GSM-Netzwerkstruktur auf nur einem Übertragungskanal nachzuempfinden.

## Beschreibung der Erfindung

Die Aufgabe der vorliegenden Erfindung ist es, ein Verfahren der eingangs genannten Art vorzuschlagen, das mehrfache Kollisionen bei mehrmaliger Datenübertragung mit hoher Wahrscheinlichkeit ausschließt und einfach handhabbar und konfigurierbar ist.

Diese Aufgabe wird erfindungsgemäß mit den Merkmalen des Anspruchs 1 gelöst, indem die konstanten, individuellen Zykluslängen aller Systeme auf dem gleichen Übertragungsmedium voneinander verschieden sind. Dabei wird die stochastische Variation der Übertragungsparameter durch eine deterministische, konstante Festlegung der Übertragungsparameter, insbesondere der Zykluslänge, aber auch der Frequenz des Datenübertragungskanals oder dgl. ersetzt, die installationsspezifisch unterschiedlich gewählt werden.

Die Datenübertragung zwischen den Kommunikationseinheiten eines Systems (Systemkomponenten) geschieht dann in einem festen Zyklus von N Zeitschlitzen mit einer konstanten Länge $T_z$. Den Systemkomponenten werden jeweils ein oder mehrere Zeitschlitze pro Zyklus eindeutig zum Senden und/oder Empfangen von Daten zugeordnet. Mindestens eine (Steuer-) Instanz übernimmt die Synchronisation des Systems, sodass innerhalb der synchronen Installation keine zeitlichen Kollisionen der ausgetauschten Botschaften auftreten können. Insgesamt wird davon ausgegangen, dass nur ein relativ geringer Anteil der Zeitschlitze tatsächlich vergeben wird, was praxisgerecht ist, wenn die Installationen z.B. den Wohnungen eines Gebäudes entsprechen und die Systemkomponenten etwa Verbrauchserfassungsgeräte für Wärme und Wasser oder Aktoren, wie z.B. elektronische Heizkörperventile oder Sensoren, z. B. für Raumtemperaturen, sind. Außerdem gibt es in bestimmten, für solche Anwendungen geeigneten Frequenzbereichen zulassungsmäßige Einschränkungen bzgl. des duty-cycle von Aussendungen, was in der Praxis ebenfalls zu einem relativ geringen Anteil tatsächlich vergebener Zeitschlitze führen muss.

Um Kollisionen mit den Datentelegrammen benachbarter Installationen gleichartiger Systeme innerhalb der gegenseitigen Übertragungsreichweite zu vermeiden, wird die Länge der Zeitschlitze relativ kurz gewählt (z.B. $T_z = {}^1/_{16}$s) und die Zykluslänge so gewählt, dass sie N Zeitschlitze beträgt, wobei gemäß einer besonders bevorzugten Ausführungsform N immer eine Primzahl oder teilerfremd zur Zeitschlitzzahl anderer Systeme ist. Die Anzahl der Zeitschlitze pro Zyklus benachbarter k Installationen $N_1$, $N_2$, ..., $N_k$ wird dann so gewählt, dass sie für jede Installation eine individuelle Primzahl oder teilerfremd zur Zeitschlitzzahl anderer Systeme ist. Innerhalb der gegenseitigen Reichweite der Installationen wird keine Primzahl mehrfach verwendet. In jedem Fall sind die konstanten, individuellen Zykluslängen auf dem gleichen Übertragungsmedium (Datenübertragungskanal) voneinander verschieden. Dadurch wird eine minimale Wahrscheinlichkeit wiederholter Kollisionen zwischen den Komponenten benachbarter Installationen erzielt.

Eine Variante des Verfahrens sieht vor, dass die Anzahl Z der für Kommunikation nutzbaren Zeitschlitze für alle Systeme konstant und identisch ist. Jedem System wird nur noch eine individuelle Anzahl $P_i$ kommunikationsfreier Pausenzeitschlitze zugeordnet, so dass die Summe der Zeitschlitze Z + Pi und damit der kollisionsrelevante Wiederholzyklus für jedes System i verschieden ist. Besonders vorteilhaft ist die Summe der Zeitschlitze Z + Pi eine Primzahl bzw. teilfremd zu den Zykluslängen anderer Systeme.

Eine weitere Variante sieht vor, zusätzlich zur Wahl der Zykluszeiten durch Benutzung mehrerer Übertragungskanalfrequenzen die Anzahl der parallel betreibbaren Installationen zu erhöhen und / oder das Niveau der Kollisionsrate zu verringern.

Weitere Varianten sehen vor, dass sich verschiedene Installationen zusätzlich zur individuellen Zykluslänge durch jeweils anders gewählte weitere Übertragungsparameter, wie z.B. Datenrate, Modulationsverfahren, Kanalkodierung, Datenformat, etc., unterscheiden.

Nachfolgend wird die vorliegende Erfindung anhand von Zahlenbeispielen und der Zeichnung näher beschrieben. Dabei ist jedes beschriebene und/oder bildlich dargestellte Merkmal für sich oder in beliebiger Kombination Teil der vorliegenden Erfindung, unabhängig von der Zusammenfassung in den Ansprüchen oder deren Rückbeziehung.

Es zeigen:

Fig. 1    die akummulierte Häufigkeit für Wiederholungskollisionen bei zunehmender Anzahl von Systemen;

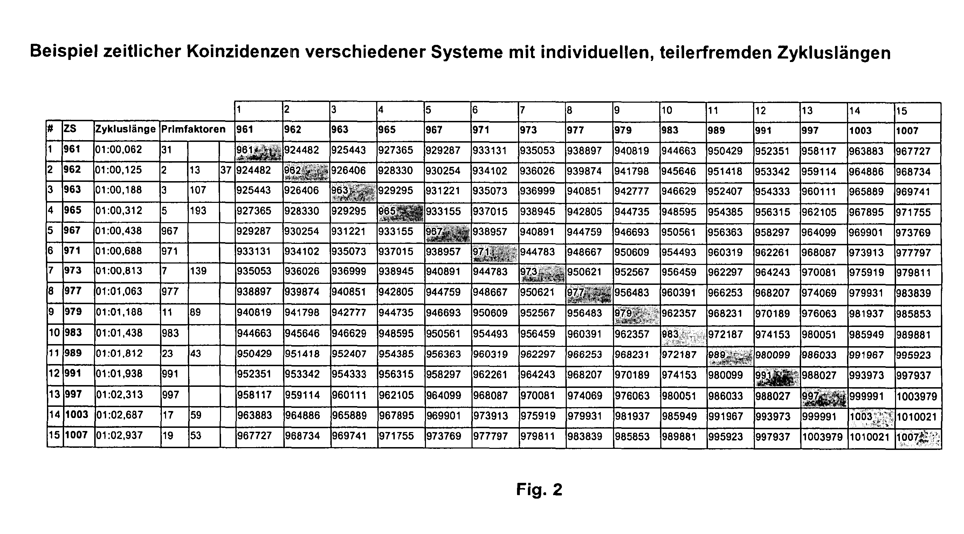

Fig. 2    eine Tabelle mit der Beurteilung zeitlicher Koinzidenzen verschiedener Systeme mit individuellen, teilerfremden Zykluslängen über die kleinsten gemeinsamen Vielfachen der Zykluslängen auf Zeitschlitzbasis 1/16s;

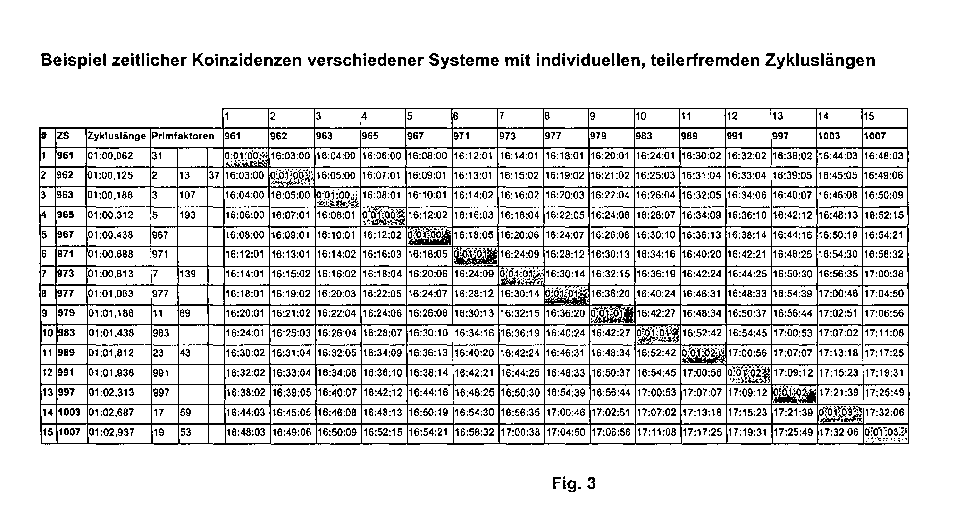

Fig. 3    eine Tabelle mit der Darstellung der Dauer wiederholter zeitlicher Überdeckung verschiedener Systeme in [hh:mm:ss] für das Beispiel gemäß Fig. 2 und

Fig. 4    eine Tabelle mit der Anzahl möglicher Zerlegungen der Pausenzeiten gemessen in Zeitschlitzen in n=1 bis n=8 Partialsummen als Beispiel eines diversifizierten Zeitverhaltens durch zusätzliche Zerlegung des Pausenanteils in n=1 bis n=8 Partialsummen.

In einem konkreten Zahlenbeispiel beträgt die Zeitschlitzlänge $T_z = {}^1/_{16}$s. Es werden Zykluslängen im Bereich von 60,4375s (entspr. N=967) und 76,0625s (entspr. N=1217) gewählt. In dieser Spanne von N gibt es 37 Primzahlen, nämlich 967, 971, 977, 983, 991, 997, 1009, 1013, 1019, 1021, 1031, 1033, 1049, 1051, 1061, 1063, 1069, 1087, 1091, 1093, 1097, 1103, 1109, 1117, 1123, 1129, 1151, 1153, 1163, 1171, 1181, 1187, 1193, 1201, 1213, 1217. Dies bedeutet, dass man 37 Installationen innerhalb der gegenseitigen Reichweite mit minimaler Wahrscheinlichkeit wiederholter Kollisionen gleicher Zeitschlitzpaare betreiben kann. Die Häufigkeit einer Kollisionswiederholung zweier bestimmter Zeitschlitze beträgt für das gewählte Beispiel weniger als 0,103%. Sie stellt hier ein Optimum (=Minimum) bzgl. der Kollisionswiederholrate zweier bestimmter Zeitschlitze dar, die bei der Wahl nicht teilerfremder Zeitschlitzzahlenpaare ($N_i$, $N_j$) immer höher läge. Dies ergibt sich aus der Tatsache, dass eine zeitliche Koinzidenz zweier Systeme durch das KgV (kleinste gemeinsame Vielfache) der Zykluslängen (gemessen in Zeitschlitzen) zweier Systeme bestimmt ist. Die Koinzidenz ist genau dann minimal, wenn die Zykluslängen verschiedener Systeme zueinander teilerfremd sind. Dies lässt sich am einfachsten durch Primzahlen erreichen.

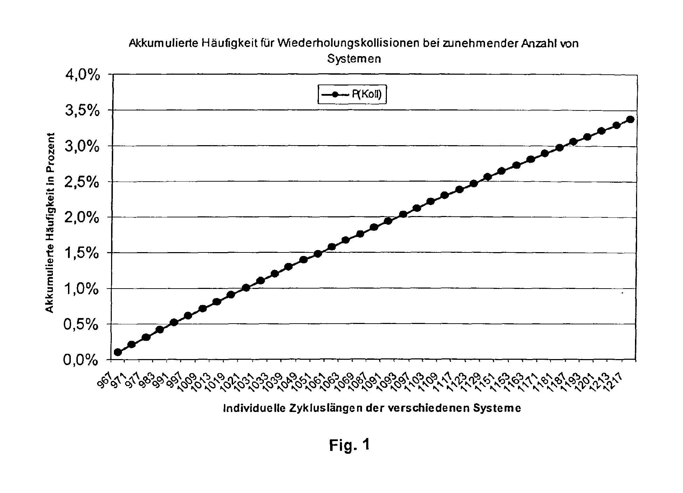

Ein weiterer Vorteil des erfindungsgemäßen Verfahrens ist, dass die Erweiterbarkeit um weitere Systeme aufgrund der unbegrenzten Verfügbarkeit von geeigneten Primzahlen kein prinzipielles Problem darstellt. Die Methode zeigt keine Sättigungseffekte, ab der die Systemstabilität sprungartig zu kippen beginnt. Dies zeigt sich an der nur etwa linear mit der Anzahl der Systeme zunehmenden Wahrscheinlichkeit für wiederholte Kollisionen, wie auch Fig. 1 zu entnehmen ist:

$$P_{Kollision} = 1 - \prod_{i=1}^{k}(1 - \frac{1}{N_i}) \text{ mit ggT}(N_i, N_j) = 1 \text{ für alle i, j.}$$

Auch für die Verfahrensvariante, bei der einer konstanten Anzahl von Kommunikationszuschlitzen eine variable Anzahl von Pausenzuschlitzen zugeordnet werden, gelten weiterhin alle zuvor gemachten Überlegungen in Bezug auf die Wahrscheinlichkeiten wiederholter Kollisionen. Das Verhältnis Z/(Z + $P_i$) Kommunikationszeit zu Zykluslänge cha-rakterisiert die Kanalbelastung für ein System i. Die maximal zulässige Grundkollisionsrate kann nun abhängig von der Anzahl konkurrierender Systeme über dieses Verhältnis eingestellt werden. Es bietet sich zusätzlich die Möglichkeit der bedarfsgerechten Konfiguration einzelner Systeme über dieses Verhältnis. Systemen mit hohem Kommunikationsbedarf kann individuell ein geringer Anteil von Pausenzeitschlitzen (zur Herabsetzung der Zykluszeit) zugeordnet werden, und Systemen mit niedrigem Kommunikationsbedarf kann ein entsprechend höherer Anteil kommunikationsfreier Pausenzeitschlitze zugeschlagen werden, um die Kanalbelastung gering zu halten.

Diese Variante erweist sich als praxisgerecht, da es i. d. R. für jedes System eine maximale Ausbaustufe bezüglich der miteinander kommunizierenden Komponenten gibt. Diese Maximalausbaustufe lässt sich direkt auf eine konstante Anzahl für Kommunikation nutzbarer Zeitschlitze Z abbilden. Das Hinzufügen von $P_i$ Pausenzeitschlitzen verschiebt keine Systemgrenzen, sondern beeinflusst lediglich den bedarfsgerecht einstellbaren Durchsatz des Informationsflusses. Die prinzipielle Gleichartigkeit der Systeme bleibt gewahrt.

Die Wahrscheinlichkeit wiederholter Kollisionen lässt sich weiter reduzieren, wenn die Gesamtanzahl der Pau-senzeitschlitze $P_i$ innerhalb des Zyklus' auf mehrere Pausenzeiten verteilt wird (anstatt alle Pausenzeitschlitze "en bloc" zu legen). Ein weiterer Vorteil ist in diesem Fall, dass ggf. eine relativ lange Totzeit, die durch eine Blockpause entstünde, vermieden wird.

Diese Verfahrensvariante wird durch das nachfolgende Zahlenbeispiel erläutert:

Zykluslänge: Z = 997 Zeitschlitze, Anzahl der nutzbaren Kommunikationszeitschlitze (Z- $P_i$) = 960, Gesamtzahl der Pausenzeitschlitze also $P_i$ = 37.

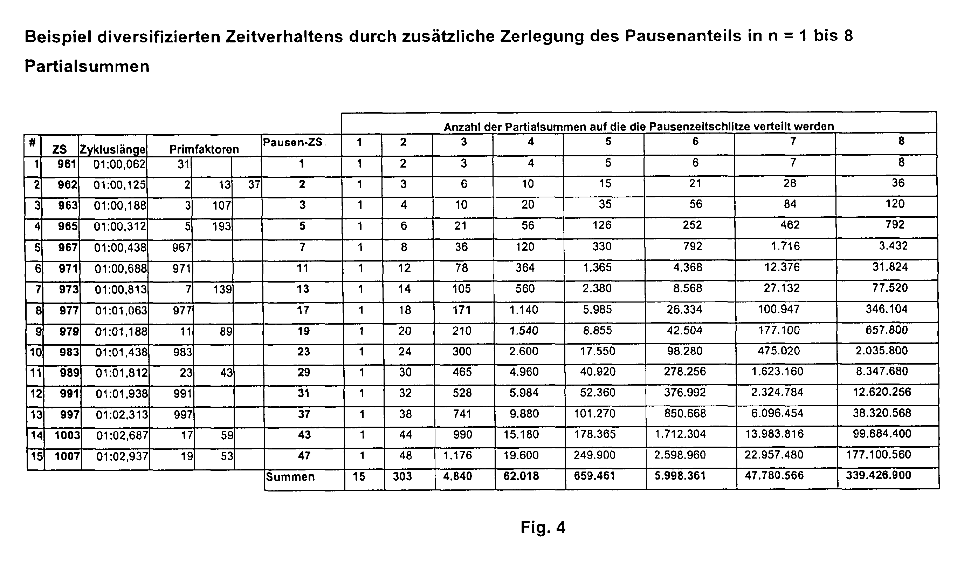

Die 37 Pausenzeitschlitze werden auf acht Unterpausen innerhalb des Gesamtzyklus' verteilt. Dabei entstehen 38.320.568 verschiedene mögliche Folgen von Partialsummen von Zeitschlitzen, die den Unterpausenlängen entsprechen. Werden unterschiedliche Folgen von Unterpausenlängen in benachbarten Installationen gleicher Zykluslänge verwendet, so ist auch hier bereits die Wahrscheinlichkeit dauerhafter Kollisionen minimiert. Siehe hierzu auch Fig. 4.

Die vorliegende Erfindung vermeidet die Nachteile der stochastischen Variation der Übertragungsparameter. Die Übertragungsparameter sind deterministisch und konstant. Das Verfahren lässt sich mit geringem Aufwand in Hardware und Software realisieren. Der Test auf Synchronität der Systemkomponenten beim Betrieb des Systems und die Aufrechterhaltung der Synchronität ist einfach, da durch konstante Wiederholungszyklen eine gute Vorhersagbarkeit des Zeitverhaltes gegeben ist. Trotzdem wird durch die geeignete Wahl der Übertragungsparameter, insbesondere der Zykluslänge, aber auch der Übertragungskanalfrequenz, einer Menge von Installationen innerhalb der gegenseitigen Übertragungsreichweite die Kollisionsrate minimiert.

**Patentansprüche**

1. Verfahren zur Übertragung von Daten zwischen mehreren Kommunikationseinheiten auf einem Übertragungsmedium, wobei jeweils eine Gruppe von Kommunikationseinheiten ein System bildet, ein oder mehrere Systeme das gleiche Übertragungsmedium nutzen, jeder Kommunikationseinheit eines Systems eine Anzahl von Kommunikationszeitschlitzen zum Senden und/oder Empfangen während eines Kommunikationszyklus zur Verfügung steht, innerhalb derer die Kommunikationseinheiten eines Systems kollisionsfrei Daten austauschen können, und die Zykluslänge eines Systems durch die individuelle, von den anderen Systemen innerhalb der Reichweite abweichende Anzahl seiner Zeitschlitze bestimmt wird, wobei die konstanten, individuellen Zykluslängen aller Systeme auf dem gleichen Übertragungsmedium voneinander verschieden sind.

2. Verfahren nach Anspruch 1, wobei die individuelle Anzahl der Zeitschlitze für jedes System eine Primzahl oder teilerfremd zur Zeitschlitzzahl anderer Systeme ist.

3. Verfahren nach Anspruch 1 oder 2, wobei eine feste, vorzugsweise gleiche Anzahl von Kommunikationszeitschlitzen pro System und/ oder eine individuelle, vorzugsweise variable Anzahl von Pausenzeitschlitzen.

4. Verfahren nach einem der vorhergehenden Ansprüche, wobei mehrere installationsspezifische Übertragungskanalfrequenzen verwendet werden.

5. Verfahren nach einem der vorhergehenden Ansprüche, wobei installationsspezifisch unterschiedlich gewählte weitere Übertragungsparameter, vorzugsweise die Datenrate, das Modulationsverfahren, die Kanalkodierung und/oder das Datenformat, verwendet werden.

**Claims**

1. A method for transmitting data between a plurality of communication units on a transmitting medium, wherein in each case a group of communication units forms a system, one or both systems use the same transmitting medium, a number of communication time slots is available for each communication unit of a system for sending and/or receiving during a communication cycle, within which time slots the communication units of a system can exchange data in a collision-free manner, and the cycle length of a system is determined by the individual number of time slots thereof, which number deviates from the other systems within range, wherein the constant, individual cycle lengths of all systems on the same transmitting medium differ from one another.

2. The method according to Claim 1, wherein the individual number of time slots for each system is a prime number or co-prime to the time-slot number of other systems.

3. The method according to Claim 1 or 2, wherein a fixed, preferably identical number of communication time slots per system and/or an individual, preferably variable number of pause time slots.

4. The method according to one of the preceding claims, wherein a plurality of installation-specific transmission channel frequencies are used.

5. The method according to one of the preceding claims, wherein differently chosen further transmission parameters, preferably the data rate, the modulation method, the channel encoding and/or the data format are used in an installation-specific manner.

**Revendications**

1. Procédé pour la transmission de données entre plusieurs unités de communication sur un support de données, dans lequel respectivement un groupe d'unités de communication forme un système, un ou plusieurs systèmes utilisant le même support de transmission, un certain nombre de créneaux temporels de communication étant à la disposition de chaque unité de communication d'un système pour l'émission et/ou la réception pendant un cycle de communication, au cours desquels créneaux les unités de communication d'un système peuvent échanger des données sans collision, et la longueur de cycle d'un système étant déterminée par le nombre individuel de ses créneaux temporels divergeant de celui des autres systèmes au sein de la portée, dans lequel les longueurs de cycle individuelles et constantes de tous les systèmes diffèrent les unes des autres sur le même support de transmission.

2. Procédé selon la revendication 1, dans lequel le nombre individuel de créneaux temporels pour chaque système est un nombre premier ou est premier par rapport au nombre de créneaux temporels d'autres systèmes.

3. Procédé selon la revendication 1 ou 2, avec un nombre fixe, de préférence identique, de créneaux temporels de communication par système et/ou un nombre individuel, de préférence variable, de créneaux temporels de pause.

4. Procédé selon l'une des revendications précédentes, dans lequel plusieurs fréquences de canal de transmission spécifiques à l'installation sont utilisées.

5. Procédé selon l'une des revendications précédentes, dans lequel on utilise d'autres paramètres de transmission sélectionnés de manière différenciée spécifiquement en fonction de l'installation, de préférence le débit de données, le procédé de modulation, le codage de canal et/ou le format des données.

Akkumulierte Häufigkeit für Wiederholungskollisionen bei zunehmender Anzahl von Systemen

Fig. 1

# Beispiel zeitlicher Koinzidenzen verschiedener Systeme mit individuellen, teilerfremden Zykluslängen

EP 1 379 014 B1

| # | ZS | Zykluslänge | Primfaktoren | | | 1 961 | 2 962 | 3 963 | 4 965 | 5 967 | 6 971 | 7 973 | 8 977 | 9 979 | 10 983 | 11 989 | 12 991 | 13 997 | 14 1003 | 15 1007 |
|---|---|---|---|---|---|---|---|---|---|---|---|---|---|---|---|---|---|---|---|---|
| 1 | 961 | 01:00,062 | 31 | | | 961 | 924482 | 925443 | 927365 | 929287 | 933131 | 935053 | 938897 | 940819 | 944663 | 950429 | 952351 | 958117 | 963883 | 967727 |
| 2 | 962 | 01:00,125 | 2 | 13 | 37 | 924482 | 962 | 926406 | 928330 | 930254 | 934102 | 936026 | 939874 | 941798 | 945646 | 951418 | 953342 | 959114 | 964886 | 968734 |
| 3 | 963 | 01:00,188 | 3 | 107 | | 925443 | 926406 | 963 | 929295 | 931221 | 935073 | 936999 | 940851 | 942777 | 946629 | 952407 | 954333 | 960111 | 965889 | 969741 |
| 4 | 965 | 01:00,312 | 5 | 193 | | 927365 | 928330 | 929295 | 965 | 933155 | 937015 | 938945 | 942805 | 944735 | 948595 | 954385 | 956315 | 962105 | 967895 | 971755 |
| 5 | 967 | 01:00,438 | 967 | | | 929287 | 930254 | 931221 | 933155 | 967 | 938957 | 940891 | 944759 | 946693 | 950561 | 956363 | 958297 | 964099 | 969901 | 973769 |
| 6 | 971 | 01:00,688 | 971 | | | 933131 | 934102 | 935073 | 937015 | 938957 | 971 | 944783 | 948667 | 950609 | 954493 | 960319 | 962261 | 968087 | 973913 | 977797 |
| 7 | 973 | 01:00,813 | 7 | 139 | | 935053 | 936026 | 936999 | 938945 | 940891 | 944783 | 973 | 950621 | 952567 | 956459 | 962297 | 964243 | 970081 | 975919 | 979811 |
| 8 | 977 | 01:01,063 | 977 | | | 938897 | 939874 | 940851 | 942805 | 944759 | 948667 | 950621 | 977 | 956483 | 960391 | 966253 | 968207 | 974069 | 979931 | 983839 |
| 9 | 979 | 01:01,188 | 11 | 89 | | 940819 | 941798 | 942777 | 944735 | 946693 | 950609 | 952567 | 956483 | 979 | 962357 | 968231 | 970189 | 976063 | 981937 | 985853 |
| 10 | 983 | 01:01,438 | 983 | | | 944663 | 945646 | 946629 | 948595 | 950561 | 954493 | 956459 | 960391 | 962357 | 983 | 972187 | 974153 | 980051 | 985949 | 989881 |
| 11 | 989 | 01:01,812 | 23 | 43 | | 950429 | 951418 | 952407 | 954385 | 956363 | 960319 | 962297 | 966253 | 968231 | 972187 | 989 | 980099 | 986033 | 991967 | 995923 |
| 12 | 991 | 01:01,938 | 991 | | | 952351 | 953342 | 954333 | 956315 | 958297 | 962261 | 964243 | 968207 | 970189 | 974153 | 980099 | 991 | 988027 | 993973 | 997937 |
| 13 | 997 | 01:02,313 | 997 | | | 958117 | 959114 | 960111 | 962105 | 964099 | 968087 | 970081 | 974069 | 976063 | 980051 | 986033 | 988027 | 997 | 999991 | 1003979 |
| 14 | 1003 | 01:02,687 | 17 | 59 | | 963883 | 964886 | 965889 | 967895 | 969901 | 973913 | 975919 | 979931 | 981937 | 985949 | 991967 | 993973 | 999991 | 1003 | 1010021 |
| 15 | 1007 | 01:02,937 | 19 | 53 | | 967727 | 968734 | 969741 | 971755 | 973769 | 977797 | 979811 | 983839 | 985853 | 989881 | 995923 | 997937 | 1003979 | 1010021 | 1007 |

**Fig. 2**

# Beispiel zeitlicher Koinzidenzen verschiedener Systeme mit individuellen, teilerfremden Zykluslängen

| # | ZS | Zykluslänge | Primfaktoren | 1 961 | 2 962 | 3 963 | 4 965 | 5 967 | 6 971 | 7 973 | 8 977 | 9 979 | 10 983 | 11 989 | 12 991 | 13 997 | 14 1003 | 15 1007 |
|---|------|-------------|--------------|---------|---------|---------|---------|---------|---------|---------|---------|---------|---------|---------|---------|---------|---------|---------|
| 1 | 961 | 01:00,062 | 31 | 0:01:00 | 16:03:00 | 16:04:00 | 16:06:00 | 16:08:00 | 16:12:01 | 16:14:01 | 16:18:01 | 16:20:01 | 16:24:01 | 16:30:02 | 16:32:02 | 16:38:02 | 16:44:03 | 16:48:03 |
| 2 | 962 | 01:00,125 | 2 13 37 | 16:03:00 | 0:01:00 | 16:05:00 | 16:07:01 | 16:09:01 | 16:13:01 | 16:15:02 | 16:19:02 | 16:21:02 | 16:25:03 | 16:31:04 | 16:33:04 | 16:39:05 | 16:45:05 | 16:49:06 |
| 3 | 963 | 01:00,188 | 3 107 | 16:04:00 | 16:05:00 | 0:01:00 | 16:08:01 | 16:10:01 | 16:14:02 | 16:16:02 | 16:20:03 | 16:22:04 | 16:26:04 | 16:32:05 | 16:34:06 | 16:40:07 | 16:46:08 | 16:50:09 |
| 4 | 965 | 01:00,312 | 5 193 | 16:06:00 | 16:07:01 | 16:08:01 | 0:01:00 | 16:12:02 | 16:16:03 | 16:18:04 | 16:22:05 | 16:24:06 | 16:28:07 | 16:34:09 | 16:36:10 | 16:42:12 | 16:48:13 | 16:52:15 |
| 5 | 967 | 01:00,438 | 967 | 16:08:00 | 16:09:01 | 16:10:01 | 16:12:02 | 0:01:00 | 16:18:05 | 16:20:06 | 16:24:07 | 16:26:08 | 16:30:10 | 16:36:13 | 16:38:14 | 16:44:16 | 16:50:19 | 16:54:21 |
| 6 | 971 | 01:00,688 | 971 | 16:12:01 | 16:13:01 | 16:14:02 | 16:16:03 | 16:18:05 | 0:01:01 | 16:24:09 | 16:28:12 | 16:30:13 | 16:34:16 | 16:40:20 | 16:42:21 | 16:48:25 | 16:54:30 | 16:58:32 |
| 7 | 973 | 01:00,813 | 7 139 | 16:14:01 | 16:15:02 | 16:16:02 | 16:18:04 | 16:20:06 | 16:24:09 | 0:01:01 | 16:30:14 | 16:32:15 | 16:36:19 | 16:42:24 | 16:44:25 | 16:50:30 | 16:56:35 | 17:00:38 |
| 8 | 977 | 01:01,063 | 977 | 16:18:01 | 16:19:02 | 16:20:03 | 16:22:05 | 16:24:07 | 16:28:12 | 16:30:14 | 0:01:01 | 16:36:20 | 16:40:24 | 16:46:31 | 16:48:33 | 16:54:39 | 17:00:46 | 17:04:50 |
| 9 | 979 | 01:01,188 | 11 89 | 16:20:01 | 16:21:02 | 16:22:04 | 16:24:06 | 16:26:08 | 16:30:13 | 16:32:15 | 16:36:20 | 0:01:01 | 16:42:27 | 16:48:34 | 16:50:37 | 16:56:44 | 17:02:51 | 17:06:56 |
| 10 | 983 | 01:01,438 | 983 | 16:24:01 | 16:25:03 | 16:26:04 | 16:28:07 | 16:30:10 | 16:34:16 | 16:36:19 | 16:40:24 | 16:42:27 | 0:01:01 | 16:52:42 | 16:54:45 | 17:00:53 | 17:07:02 | 17:11:08 |
| 11 | 989 | 01:01,812 | 23 43 | 16:30:02 | 16:31:04 | 16:32:05 | 16:34:09 | 16:36:13 | 16:40:20 | 16:42:24 | 16:46:31 | 16:48:34 | 16:52:42 | 0:01:02 | 17:00:56 | 17:07:07 | 17:13:18 | 17:17:25 |
| 12 | 991 | 01:01,938 | 991 | 16:32:02 | 16:33:04 | 16:34:06 | 16:36:10 | 16:38:14 | 16:42:21 | 16:44:25 | 16:48:33 | 16:50:37 | 16:54:45 | 17:00:56 | 0:01:02 | 17:09:12 | 17:15:23 | 17:19:31 |
| 13 | 997 | 01:02,313 | 997 | 16:38:02 | 16:39:05 | 16:40:07 | 16:42:12 | 16:44:16 | 16:48:25 | 16:50:30 | 16:54:39 | 16:56:44 | 17:00:53 | 17:07:07 | 17:09:12 | 0:01:02 | 17:21:39 | 17:25:49 |
| 14 | 1003 | 01:02,687 | 17 59 | 16:44:03 | 16:45:05 | 16:46:08 | 16:48:13 | 16:50:19 | 16:54:30 | 16:56:35 | 17:00:46 | 17:02:51 | 17:07:02 | 17:13:18 | 17:15:23 | 17:21:39 | 0:01:03 | 17:32:06 |
| 15 | 1007 | 01:02,937 | 19 53 | 16:48:03 | 16:49:06 | 16:50:09 | 16:52:15 | 16:54:21 | 16:58:32 | 17:00:38 | 17:04:50 | 17:06:56 | 17:11:08 | 17:17:25 | 17:19:31 | 17:25:49 | 17:32:06 | 0:01:03 |

Fig. 3

EP 1 379 014 B1

Beispiel diversifizierten Zeitverhaltens durch zusätzliche Zerlegung des Pausenanteils in n = 1 bis 8 Partialsummen

| # | ZS | Zykluslänge | Primfaktoren | | | Pausen-ZS | Anzahl der Partialsummen auf die die Pausenzeitschlitze verteilt werden | | | | | | | |
|---|---|---|---|---|---|---|---|---|---|---|---|---|---|---|
| | | | | | | | 1 | 2 | 3 | 4 | 5 | 6 | 7 | 8 |
| 1 | 961 | 01:00,062 | 31 | | | 1 | 1 | 2 | 3 | 4 | 5 | 6 | 7 | 8 |
| 2 | 962 | 01:00,125 | 2 | 13 | 37 | 2 | 1 | 3 | 6 | 10 | 15 | 21 | 28 | 36 |
| 3 | 963 | 01:00,188 | 3 | 107 | | 3 | 1 | 4 | 10 | 20 | 35 | 56 | 84 | 120 |
| 4 | 965 | 01:00,312 | 5 | 193 | | 5 | 1 | 6 | 21 | 56 | 126 | 252 | 462 | 792 |
| 5 | 967 | 01:00,438 | 967 | | | 7 | 1 | 8 | 36 | 120 | 330 | 792 | 1.716 | 3.432 |
| 6 | 971 | 01:00,688 | 971 | | | 11 | 1 | 12 | 78 | 364 | 1.365 | 4.368 | 12.376 | 31.824 |
| 7 | 973 | 01:00,813 | 7 | 139 | | 13 | 1 | 14 | 105 | 560 | 2.380 | 8.568 | 27.132 | 77.520 |
| 8 | 977 | 01:01,063 | 977 | | | 17 | 1 | 18 | 171 | 1.140 | 5.985 | 26.334 | 100.947 | 346.104 |
| 9 | 979 | 01:01,188 | 11 | 89 | | 19 | 1 | 20 | 210 | 1.540 | 8.855 | 42.504 | 177.100 | 657.800 |
| 10 | 983 | 01:01,438 | 983 | | | 23 | 1 | 24 | 300 | 2.600 | 17.550 | 98.280 | 475.020 | 2.035.800 |
| 11 | 989 | 01:01,812 | 23 | 43 | | 29 | 1 | 30 | 465 | 4.960 | 40.920 | 278.256 | 1.623.160 | 8.347.680 |
| 12 | 991 | 01:01,938 | 991 | | | 31 | 1 | 32 | 528 | 5.984 | 52.360 | 376.992 | 2.324.784 | 12.620.256 |
| 13 | 997 | 01:02,313 | 997 | | | 37 | 1 | 38 | 741 | 9.880 | 101.270 | 850.668 | 6.096.454 | 38.320.568 |
| 14 | 1003 | 01:02,687 | 17 | 59 | | 43 | 1 | 44 | 990 | 15.180 | 178.365 | 1.712.304 | 13.983.816 | 99.884.400 |
| 15 | 1007 | 01:02,937 | 19 | 53 | | 47 | 1 | 48 | 1.176 | 19.600 | 249.900 | 2.598.960 | 22.957.480 | 177.100.560 |
| | | | | | | Summen | 15 | 303 | 4.840 | 62.018 | 659.461 | 5.998.361 | 47.780.566 | 339.426.900 |

Fig. 4

EP 1 379 014 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5732076 A
- DE 19824471 A1
- US 6038455 A
- EP 1189366 A1